(19) Europäisches Patentamt
European Patent Office
Office européen des brevets

(11) **EP 2 469 128 B1**

(12) **EUROPEAN PATENT SPECIFICATION**

(45) Date of publication and mention
of the grant of the patent:
**30.04.2014 Bulletin 2014/18**

(51) Int Cl.:
*F16H 59/48* *(2006.01)*   *F16H 61/02* *(2006.01)*

(21) Application number: **10196922.8**

(22) Date of filing: **23.12.2010**

(54) **Method for tuning a gearshift point of an automatic transmission**

Verfahren zur Abstimmung eines Schaltpunkts von Automatikgetrieben

Procédé de réglage d'un point de changement de vitesse d'une transmission automatique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.06.2012 Bulletin 2012/26**

(73) Proprietor: **Caterpillar, Inc.**
**Peoria, IL 61629-6490 (US)**

(72) Inventors:
• **Harper, Robert Nicholas**
**MELBOURNE, Derbyshire DE73 8DA (GB)**
• **Carlson, Douglas Arthur**
**MORTON, IL 61550 (US)**
• **Anuar, Hazarul**
**PEORIA, IL 61629-6490 (US)**
• **Johnson, Peter J.**
**PEORIA, IL 61629-6490 (US)**

(74) Representative: **Modiano, Micaela Nadia**
**Modiano & Partners (IT)**
**Via Meravigli, 16**
**20123 Milano (IT)**

(56) References cited:
**US-A- 5 568 748    US-A- 6 067 495**

**Description**

Technical Field

This disclosure generally relates to the field of gearshift operations in an automatic transmission of a vehicle, and particularly to a method for determining gearshift points in an automatic transmission and, more particularly, to modifying the gearshift points.

Background

A method in accordance with the preamble of claim 1 is known from US 5 568 748 A.
Gearshifting in an automatic transmission may be controlled as a function of transmission output speed and may be effected according to predetermined gearshift maps. Gearshifting may be associated with upshift and downshift points for effecting gear ratio changes.
The upshift and downshift points may be predetermined or calibrated during factory production of an engine or machine. The predetermined upshift and downshift points may be selected to prevent hunting or shift cycling. However, the predetermined upshift and downshift points may not be appropriate for a particular engine as the power curves may vary across a population of engines. Thus, the predetermined upshift and downshift points may limit the performance of the vehicle, for example when the drive load limits vehicle speed at or near an upshift point.
The present disclosure is directed, at least in part, to improving or overcoming one or more aspects of the prior art engine component support structures.

Brief Summary of the Invention

The invention is defined in claim 1. Preferred embodiments thereof are defined in the dependent claims.
In particular, the present disclosure describes a method for tuning a gearshift point of an automatic transmission comprising the steps of calculating pre-shift average machine acceleration upon command for an upshift; calculating post-shift average machine acceleration; determining the difference in the pre-shift and the post-shift average machine accelerations to obtain an acceleration delta value; and calculating a shift point delta value based on the acceleration delta value to modify the upshift point associated with the upshift.
Other features and advantages of the present disclosure will be apparent from the following description of various embodiments, when read together with the accompanying drawings.

Brief Description of the Drawings

The foregoing and other features and advantages of the present disclosure will be more fully understood from the following description of various embodiments, when read together with the accompanying drawings, in which:

Fig. 1 is a machine power vs transmission output speed graph of machine power curves for a lower gear and a higher gear where the gearshift point is set low;
Fig. 2 is a machine power vs transmission output speed graph of machine power curves for a lower gear and a higher gear wherein the gearshift point is set high;
Fig. 3 is a flowchart exemplifying a method for tuning a gearshift point of an automatic transmission according to the present disclosure;
Fig. 4 is a transmission output speed vs time graph corresponding to the graph of Fig. 2 and exemplifying the method according to the present disclosure;
Fig. 5 is a transmission output speed vs time graph corresponding to the graph of Fig. 3 and exemplifying the method according to the present disclosure;
Fig. 6 is a flowchart exemplifying an embodiment of a method for tuning a gearshift point of an automatic transmission according to the present disclosure; and
Fig. 7 is a flowchart exemplifying an embodiment of a sub-routine of the flowchart of Fig. 6 according to the present disclosure.

Detailed Description

This disclosure generally relates to a method tuning a gearshift point in an automatic transmission of a machine.
A machine may comprise a power train which includes an engine, an automatic power transmission and a drive train. The engine may drive the input of the automatic transmission through a torque converter. The torque converter may include a lockup clutch. The output of the automatic transmission may be coupled to the drive train.

The power train may further comprise a controller. The controller may receive input signals representative of machine system parameters, including an engine speed signal from an engine speed sensor, a transmission input speed signal from a transmission input speed sensor, a transmission output speed signal from a transmission output speed sensor.

The controller may control the operation of the transmission via upshift and downshift solenoids. The controller may receive command signals to selectively deliver control signals to the solenoids for the initiation of gear change operations.

The controller may be configured to store in a memory upshift and downshift points that are preprogrammed at the factory. Tuning of gearshift points of the automatic transmission may be controlled by the controller in accordance with software programs. The controller may be configured to adjust the upshift and/ or downshift shift points according to machine performance. The controller may be configured to store information required for tuning a gearshift point.

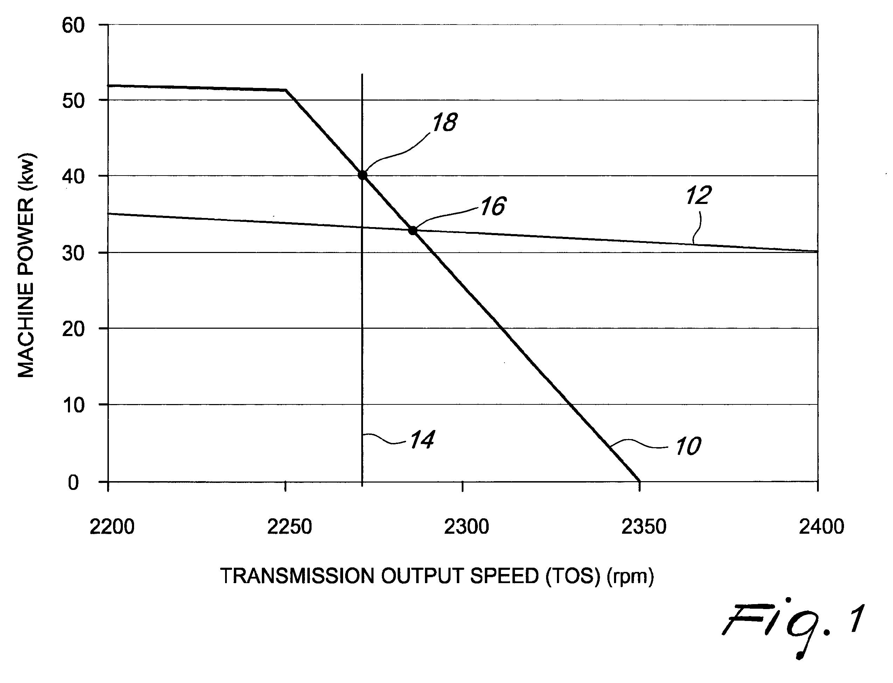

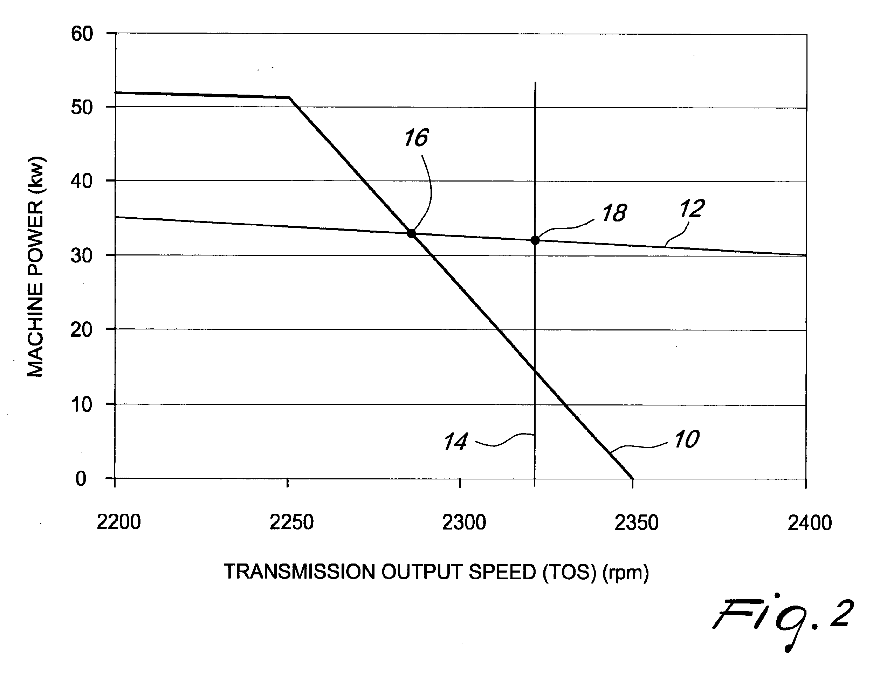

Figs 1 and 2 illustrate prior art machine power curves which may correspond to a pair of neighboring transmission gears. A gear pair may be, for example, a lower gear of 4th gear and the higher gear of 5th gear. Curve **10** may represent a lower gear and curve **12** may represent a higher gear. Curve **10** intersects curve **12** at crossover point **16** which may represent an ideal gearshift point. Line **14** may represent a predetermined gearshift position which intersects curve **10** at upshift point **18**. The Line **14** may be conservatively selected to minimise gear hunting.

With reference to Fig. 1, as the machine accelerates, a gearshift from a lower gear to a higher gear may occur at gearshift point **18**. The power available may be reduced as the upshift point **18** may be set at a lower Transmission Output Speed (TOS) relative to the crossover point **16**. The acceleration after the gearshift (post-shift acceleration) may be lower than the acceleration before shift (pre-shift acceleration). If the machine is on an upward grade, the difference between the pre-shift acceleration and the post-shift acceleration may cause the machine to decelerate after the gearshift. This deceleration may cause gear hunting which is undesirable. Gear hunting may cause operator dissatisfaction, may reduce clutch life and/ or may cause the machine to operate outside optimum efficiency.

With reference to Fig. 2 as the machine accelerates, a gearshift from a lower gear to a higher gear may occur at gearshift point **18**. The power available may be increased as the upshift point **18** may be set at a higher TOS relative to the crossover point **16**. The post-shift acceleration may be greater than the pre-shift acceleration. Under certain circumstances, the machine may not be able to gearshift from the lower gear to the higher gear. The machine may then not operate in the appropriate gear which may be detrimental to the machine performance.

One aspect of the method according to the present disclosure may be determining approximately where the crossover point 16 occurs then modifying the upshift point 18 to a value near the crossover point 16. This may enable a power available to the wheels of a vehicle after the gearshift to be slightly greater than the power available to the wheels before the gearshift. The method is used to modify the gearshift points of a gear shift. The gearshift points includes the upshift point 18 and a corresponding downshift point.

The timing and magnitude of adjustment to the upshift point 18 may be based on the machine acceleration data. The modification of the gearshift points may, according to the present disclosure, prevent gear hunting. The machine acceleration may be calculated by using the least squares best fit calculation for a sample taken. The machine acceleration may be averaged over an averaging time duration. The averaging time duration may be used to compensate for the oscillations due to the machine dynamics which may be included in the TOS signal.

In an embodiment the average machine acceleration may be calculated using the formula 1.

Formula 1:

$$accel = \frac{n\sum_{i=1}^{i=n}(t_i \times TOS_i) - \sum_{i=1}^{i=n}t_i\sum_{i=1}^{i=n}TOS_i}{n\sum_{i=1}^{i=n}t_i^2 - \left(\sum_{i=1}^{i=n}t_i\right)^2}$$

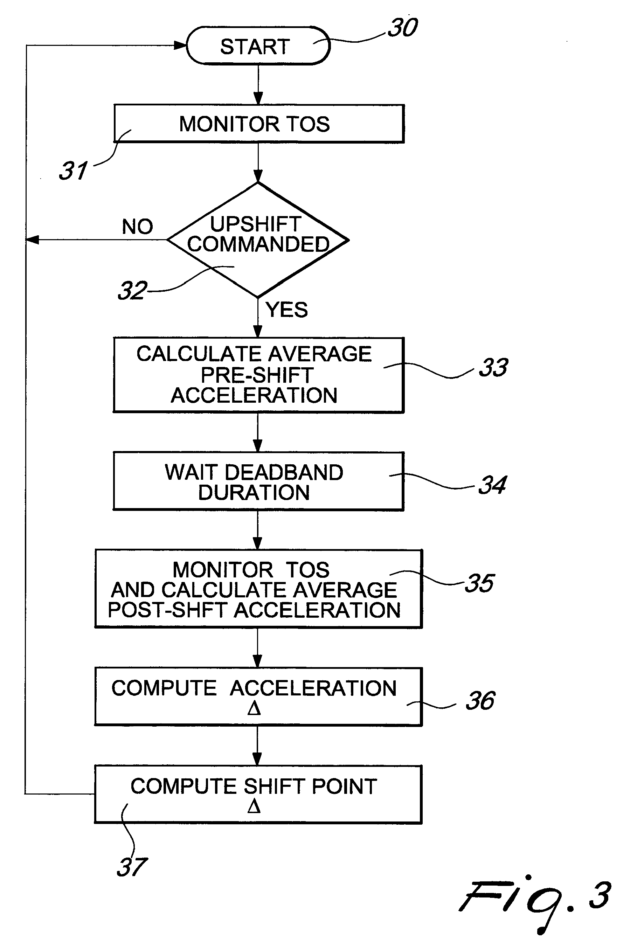

Fig. 3 illustrates a flowchart of a method for tuning a gearshift point according to the present disclosure. The method will be described with reference to the flow chart. The terms "average pre-shift acceleration" and "average post-shift acceleration" refer, respectively, to average machine accelerations before and after a gearshift.

At step 31 the controller may monitor the TOS. The controller may monitor the TOS when the transmission is operating with a lower gear in a gear set.

In step 32 the controller may check if a gearshift is commanded. The gearshift command may be a gear upshift command.

If a command signal is not received by the controller to initiate a gearshift operation, the controller may return to step 31.

If a command signal is received to initiate the gearshift operation the controller may go to step 33.

In an embodiment, a control step may be provided between step 32 and step 33. In the control step, the controller may check for valid conditions before going to step **33.** If valid conditions are present the controller may go to step **33.** If valid conditions are not present the controller may go to the start of the routine.

At step 33 the controller may calculate the average pre-shift acceleration.

In an embodiment, the pre-shift acceleration may be calculated over a pre-time duration. The pre-shift duration may be between 0.5s to 3s. The pre-shift duration may be between 1s to 2s. The pre-shift duration may be 1.5s.

At step **34** the controller may wait over a deadband duration.

In an embodiment, the deadband duration may be between 0.5s to 1.5s. The deadband duration may be 1s.

At the end of the deadband duration, the controller may go to step **35.** In step **35** the controller may monitor the TOS. The controller may calculate the average post-shift acceleration.

In an embodiment, the average post-shift acceleration may be calculated over a post-shift duration. The post-shift duration may be between 0.5s to 3s. The post-shift duration may be between 1s to 2s. The post-shift duration may be 1.5s. The controller may initiate calculation of the post-shift duration after the deadband duration.

In an embodiment, the controller may effect calculation of the average post-shift acceleration after the sum of the deadband duration and the post-shift duration.

In an embodiment, a control step may be provided prior to the calculation of the average post-shift acceleration. In the control step, the controller may check for valid conditions before the calculation of the average post-shift acceleration. If valid conditions are present the controller may calculate the average post-shift acceleration. If valid conditions are not present the controller may go to the start of the routine.

At step **36** the controller may compute the acceleration delta value (Acceleration $\Delta$) by determining the difference in the average pre-shift and the post-shift machine accelerations.

At step **37** the controller may compute the shift point delta (SP$\Delta$) value based on the acceleration delta value.

The SP$\Delta$ is calculated based on a lookup table. The SP$\Delta$ may be used to adjust the upshift point (USP) associated with the gearshift.

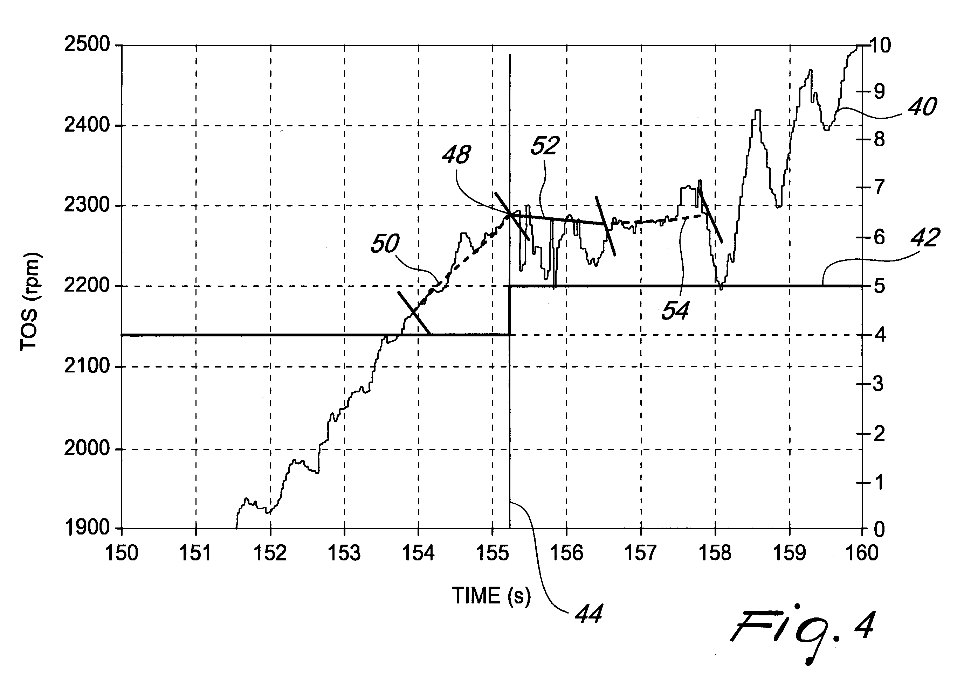

Fig. 4 is a graph showing the change of TOS over time with the application of the method according to the present disclosure. The graph of Fig. 4 corresponds to the graph of Fig. 2 with the lower gear being selected as $4^{th}$ gear and the higher gear being selected as $5^{th}$ gear, as nonlimiting examples.

The TOS may be represented by the curve **40**. Curve **42** may represent the engaged transmission gear. Line **44** may represent a predetermined gearshift position which intersects curve **40** at upshift point **48**. Line **50** may represent the pre-shift duration, line **52** may represent the deadband duration and line **54** may represent the post-shift duration.

The average pre-shift acceleration may be 100rpm/s and the average post-shift acceleration may be 5rpm/s. The Acceleration $\Delta$ may be 95rpm/s. The calculated Acceleration $\Delta$ may then be used to calculate the SP$\Delta$ in order to modify the USP for the subsequent upshift.

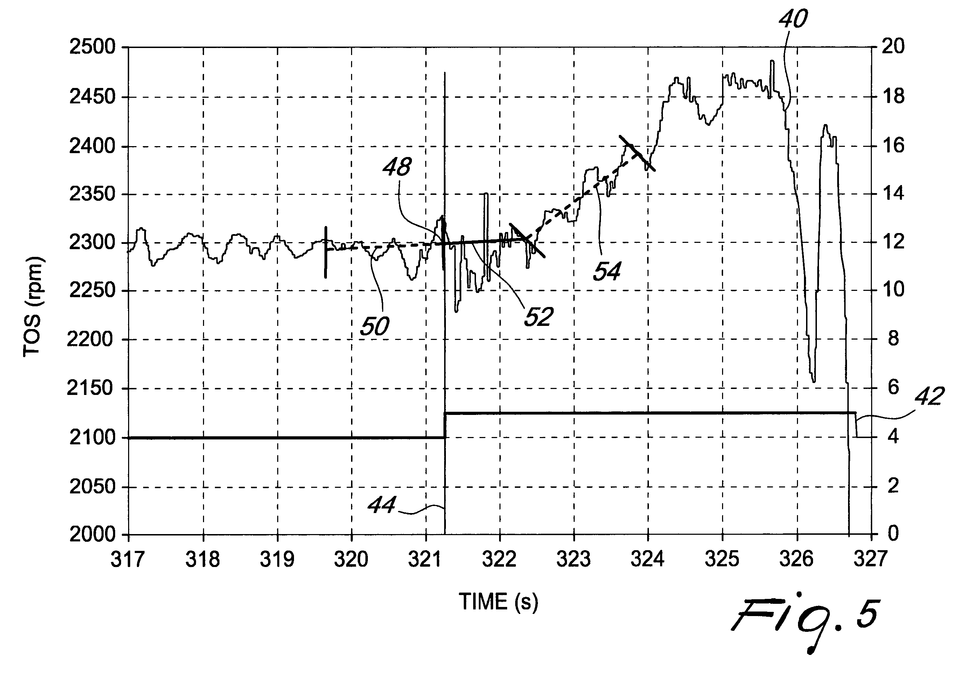

Fig. 5 is a graph showing the change of TOS over time with the application of the method according to the present disclosure. The graph of Fig. 5 corresponds to the graph of Fig. 4 with the lower gear being selected as $4^{th}$ gear and the higher gear being selected as 5th gear, as nonlimiting examples.

The TOS may be represented by the curve **40**. Curve **42** may represent the engaged transmission gear. Line **44** may represent a predetermined gearshift position which intersects curve **40** at upshift point **48**. Line **50** may represent the pre-shift duration, line **52** may represent the deadband duration and line **54** may represent the post-shift duration.

The average pre-shift acceleration may be 5rpm/s and the post-shift acceleration may be 70rpm/s. The Acceleration $\Delta$ may be -65rpm/s. The calculated Acceleration $\Delta$ may then be used to calculate the SP$\Delta$ in order to modify the USP for the subsequent upshift.

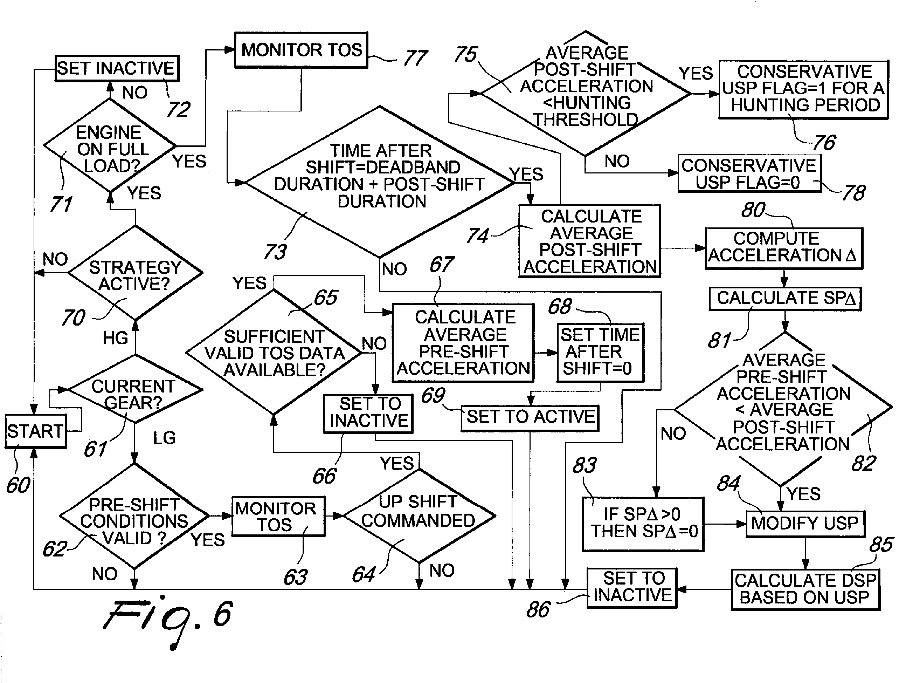

Fig. 6 illustrates a flowchart exemplifying an embodiment of a method for tuning a gearshift point of an automatic transmission according to the present disclosure. The embodiment will be described with reference to the flow chart. The terms "average pre-shift acceleration" and "average post-shift acceleration" refer, respectively, to average machine accelerations before and after a gearshift.

At step **61** the controller checks the gear that is engaged.

If the gear that is engaged is a lower gear (LG) of a gear pair the controller may move to

Step **62.**

At step **62** the controller may check if conditions prior to a gearshift (pre-shift conditions) are valid. In an embodiment, the pre-shift conditions may be selected to be any combination of the following conditions: the conservative USP flag is equal to 0, the transmission shift mode is set to automatic; the lockup clutch is engaged, the engaged gear is in a lower gear of a gear set. The pre-shift conditions may be characteristic for a specific machine and/ or a specific gear combination. The skilled person would appreciate that the pre-shift condition may vary according to operating circumstances.

If the pre-shift conditions are not valid the controller may return to the start of routine.

If the pre-shift conditions are valid the controller may go to step **63.**

In step **63** the controller may monitor the TOS.

At step **64** the controller may check if a gearshift is commanded.

In an embodiment, the gearshift command may be an upshift command. The gearshift command may be for a corresponding pair of neighboring transmission gears.

In an embodiment the gear pair may be a lower gear of 4th gear and the higher gear of 5th gear. The gearshift command may cause a change in the gear from 4th gear to 5th gear.

If a command signal is not received by the controller to initiate a gearshift operation, the controller may return to the start of the routine.

If a command signal is received to initiate the gearshift operation the controller may go to step **65.**

At step **65** the controller may check if sufficient valid TOS data is available.

In an embodiment, valid TOS data may be the TOS monitored when the conditions are valid. Sufficient valid TOS data may be valid TOS data obtained over an averaging duration, for example over the pre-shift duration.

If valid conditions are not present the controller may go to step **66** to set the routine to inactive. The controller may then return to the start of the routine.

If sufficient valid TOS data is present the controller may go to step **67.**

At step **67** the controller may calculate the average pre-shift acceleration.

In an embodiment, the average pre-shift acceleration may be calculated over a pre-shift duration. The pre-shift duration may be between 0.5s to 3s. The pre-shift duration may be between 1s to 2s. The pre-shift duration may be 1.5s.

At step **68,** the controller may set the timer to 0.

At step **69,** the controller may set the routine to active. The controller may then return to the start of the routine.

From the start the controller may go to step **61** and may check the gear that is engaged. If the gear that is engaged is a higher gear (HG) of a gear pair the controller may move to Step **70.**

At step **70** the controller may check if the routine is active. If the routine is inactive the controller may return to the start of the routine. If the routine is active the controller may go to step **71.**

At step **71** the controller may check if the engine is operating at full load or full throttle. If the engine is not operating at full load the controller may go to step **72** to set the routine to inactive. The controller may then return to the start of the routine.

If the engine is operating at full load the controller may go to step **77.**

In step **77** the controller may monitor the TOS.

At step **73** the controller may check if a period of a sum of the deadband duration and post-shift duration has elapsed after the upshift was carried out.

In an embodiment, the deadband duration may be between 0.5s to 1.5s. The deadband duration may be 1s.

If the period of a sum of the deadband duration and post-shift duration has not elapsed, the controller may return to the start of the routine.

In an embodiment, if over any one of the pre-shift duration, deadband duration and post-shift duration the engine is no longer operating at full load or full throttle the controller may deactivate the routine and return to the start of the routine.

In an embodiment, if the post-shift engine speed does not remain above a predetermined threshold the controller may return to the start of the routine.

If the period of a sum of the deadband duration and post-shift duration, the controller may go to step **74.**

In an embodiment, the controller may go to step **74** if the engine operates at full load or full throttle over the pre-shift duration, deadband duration and post-shift duration.

In an embodiment, the controller may go to step **74** if the post-shift engine speed remains above a predetermined threshold.

At step **74** the controller may calculate the average post-shift acceleration.

In an embodiment, the average post-shift acceleration may be calculated over a post-shift duration. The post-shift duration may be between 0.5s to 3s. The post-shift duration may be between 1s to 2s. The post-shift duration may be 1.5s.

At step **75** the controller may run a sub-routine to prevent initiation of gear hunting cycles. The controller may check if the average post-shift acceleration is greater than the hunting threshold.

If the average post-shift acceleration is less than the hunting threshold the conservative USP flag is set to 1 for an anti-hunting period, at step **76.**

In an embodiment, the anti-hunting period may be 30s.

If the average post-shift acceleration is greater than the hunting threshold the conservative USP flag is set to 0, at step **78.**

At step **80** the controller may compute the Acceleration $\Delta$ by determining the difference in the pre-shift and the post-shift average machine accelerations.

At step **81** the controller may compute the SP$\Delta$ based on the Acceleration $\Delta$.

The SP$\Delta$ is calculated based on a lookup table.

At step **82** the controller may check if the average pre-shift acceleration is greater than the average post-shift acceleration.

If the average pre-shift acceleration is greater than the average post-shift acceleration, the controller may go to step **84.**

If the average pre-shift acceleration is not greater than the average post-shift acceleration, the controller may go to step **83.** At step **83** the controller may set the SP$\Delta$ to 0 when the calculated SP$\Delta$ is greater than 0 and may then go to step **84.**

At step **84** the controller may modify the USP. The USP may be modified by adding the SP$\Delta$ to the previous USP which was the basis for the initial gearshift.

At step **85** the controller calculates the downshift point (DSP) based on the USP. The corresponding DSP is calculated on the basis of the modified upshift point. Modifying a downshift point may help prevent gear hunting.

A given engine may have a wide range of power curves, due to tolerances, so that the most appropriate USP may vary depending on the engine curve. The DSP may be calculated from transmission analysis.

Transmission analysis may be performed by using the extreme tolerance engine curves and assuming tolerance of the shift point that the method may set. The corresponding DSPs may be found to correspond with the USP in each case. The method may use transmission analysis to determine a simple transform from USP to DSP.

At step **86** the controller may set the routine to inactive and may go to the start of the routine.

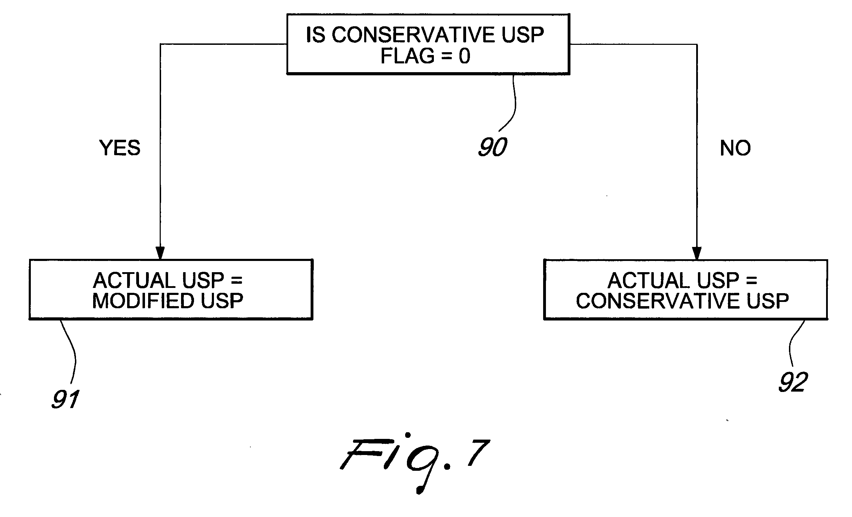

Fig. 7 is a flowchart exemplifying an embodiment of a sub-routine, using the conservative USP flag obtained in step **76** or step **78.** At step **90** the controller checks if the conservative USP flag is set to 0. If the conservative USP flag is set to 0, the controller goes to step **91** and sets the actual USP to be the modified USP. If the conservative USP flag is not set to 0, the controller goes to step **92** and sets the actual USP to be the conservative USP (set high to prevent further gear hunting for a set period).

The skilled person would realise that foregoing embodiments may be modified to obtain the method of tuning a gearshift point of an automatic transmission of the present disclosure.

Industrial Applicability

This disclosure describes a method of tuning a gearshift point of an automatic transmission of a vehicle.

The industrial applicability of the method for gearshifting as described herein will have been readily appreciated from the following discussion.

The method may allow for the tuning of a gearshift point in an automatic transmission to ensure that a gearshift occurs at a most appropriate point when power available to the wheels of a vehicle after the gearshift is slightly greater than the power available to the wheels before the gearshift. The power available may be determined from the acceleration of the machine.

The predetermined factory upshift point may be used in the initial gearshift. The method according to the present disclosure may then initiate the routine to tune the gearshift point on the basis of the predetermined factory upshift point so that in the subsequent gearshift, the upshift and downshift points may be modified closer to an ideal crossover point to improve the machine performance.

Accordingly, this disclosure includes all modifications and equivalents of the subject matter recited in the claims appended hereto as permitted by applicable law.

The method according to the present disclosure may be applicable to vehicle transmissions that are associated with various types of working machines, for example, on-highway or off-highway trucks, wheel loaders, backhoe loader or the like.

One skilled in the art will realise the disclosure may be embodied in other specific forms without departing from the invention as defined by the appended claims.

**Claims**

**1.** A method for tuning a gearshift point of an automatic transmission comprising the steps of:

calculating average pre-shift machine acceleration upon command for an upshift;
calculating average post-shift machine acceleration;

determining the difference in the average pre-shift and the post-shift machine accelerations to obtain an acceleration delta value;

calculating a shift point delta value based on the acceleration delta value to modify the upshift point associated with the upshift; and

calculating and modifying a corresponding downshift point on the basis of the modified upshift point

**characterised by** calculating the shift point delta value through a lookup table and determining the downshift point through a transform applied to the modified upshift point based on transmission analysis.

2.  The method of claim 1 wherein the average pre-shift machine acceleration is calculated over a pre-shift duration and the average post-shift machine acceleration is calculated over a post-shift duration.

3.  The method of claim 2 wherein calculation of the average post-shift machine acceleration is effected after the sum of a deadband duration and the post-shift duration.

4.  The method of claim 3 wherein the deadband duration is between 0.5s to 1.5s.

5.  The method of claim 3 or 4 wherein the pre-shift duration is between 0.5s to 3s.

6.  The method of claim 3, 4 or 5 wherein the post-shift duration is between 0.5s to 3s.

7.  The method of any one of the preceding claims 2 to 6 wherein the average post-shift machine acceleration is calculated if full engine throttle has been used over the pre-shift duration, the deadband duration and the post-shift duration.

8.  The method of any one of the preceding claims further comprising a step of adjusting the upshift point to a conservative value for an anti-hunt period to preventing gear hunting.

9.  The method of claim 8 wherein the anti-hunt period is 30s.

10. The method of any one of the preceding claims further comprising the step of checking for valid pre-shift conditions prior to the step of calculating average pre-shift machine acceleration.

11. The method of claim 10 wherein the pre-shift conditions may be selected to be any combination of the following conditions: the conservative USP flag is equal to 0, the transmission shift mode is set to automatic; the lockup clutch is engaged, the engaged gear is in a lower gear of a gear set.

12. The method of any one of the preceding claims wherein the step of calculating a shift point delta value based on the acceleration delta value comprises checking that the average pre-shift machine acceleration is greater than the average post-shift machine acceleration.

**Patentansprüche**

1.  Verfahren zum Einstellen eines Schaltpunktes eines Automatikgetriebes, dass die folgenden Schritte aufweist:

    Berechnen einer durchschnittlichen Vorschalt-Maschinenbeschleunigung auf Befehl für ein Hochschalten;
    Berechnen einer durchschnittlichen Nachschalt-Maschinenbeschleunigung;
    Bestimmen der Differenz zwischen der durchschnittlichen Vorschalt- und der Nachschalt-Maschinenbeschleunigung um einen Beschleunigungs-Deltawert zu erhalten;
    Berechnen eines Schaltpunkt-Deltawertes basierend auf dem Beschleunigungs-Deltawert um den Hochschaltpunkt, der mit dem Hochschalten verbunden ist, zu verändern;
    Berechnen und Verändern eines entsprechenden Herunterschaltpunktes auf der Basis des veränderten Hochschaltpunktes, **dadurch gekennzeichnet, dass** der Schaltpunkt-Deltawert durch eine Zuordnungstabelle berechnet wird und der Herunterschaltpunkt durch eine Transformation bestimmt wird, die auf den veränderten Hochschaltpunkt auf der Basis der Getriebeanalyse angewandt wird.

2.  Verfahren nach Anspruch 1, **dadurch gekennzeichnet, dass** die durchschnittliche Vorschalt-Maschinenbeschleunigung über eine Vorschaltdauer und die durchschnittliche Nachschalt-Maschinenbaschleunigung über eine Nachschaltdauer berechnet wird.

3. Verfahren nach Anspruch 2, **dadurch gekennzeichnet, dass** das Berechnen der durchschnittlichen Nachschalt-Maschineubeschleunigung nach der Summe aus einer Todbanddauer und der Nachschaltdauer durchgeführt wird.

4. Verfahren nach Anspruch 3, **dadurch gekennzeichnet, dass** die Todbanddauer zwischen 0,5 sec. und 1,5 sec. beträgt.

5. Verfahren nach Anspruch 3 oder 4, **dadurch gekennzeichnet, dass** die Vorschaltdauer zwischen 0,5 sec. und 3 sec. beträgt.

6. Verfahren nach Anspruch 3, 4 oder 5, **dadurch gekennzeichnet, dass** die Nachschaltdauer zwischen 0,5 sec. und 3 sec. beträgt.

7. Verfahren nach einem der vorstehenden Anspruche 2 bis 6, **dadurch gekennzeichnet, dass** die durchschnittliche Nachschalt-Maschinenbeschleunigung berechnet wird, wenn für die Maschine Vollgas Über die Vorschaltdauer, die Todbanddauer und die Nachschaltdauer gegeben wurde.

8. Verfahren nach einem der vorstehenden Ansprüche, **gekennzeichnet durch** den zusätzlichen Schritt, bei dem der Hochschaltpunkt für eine Antipandeldauer auf einen Vorsichtswert gesetzt wird, um Pendelschaltungen zu vermeiden.

9. Verfahren nach Anspruch 8, **dadurch gekennzeichnet, dass** die Antipendeldauer 30 sec. beträgt.

10. Verfahren nach einem der vorstehenden Anspruch, **gekennzeichnet durch** den Schritt, bei dem vor dem Berechnen der durchschnittlichen Vorschalt-Maschinenbeschleunigung auf gültige Vorschalt-Bedingungen geprüft wird.

11. Verfahren nach Anspruch 10, **dadurch gekennzeichnet, dass** die Vorschalt-Bedingungen so gewählt werden können, dass sie irgendeine Kombination der folgenden Bedingungen sind: die Vorsichts-USP-Kennzeichnung ist 0, der Getriebeschaltmodus ist auf Automatik gestellt, die Überbrückungskupplung ist eingerastet, der eingelegte Gang ist in einem kleineren Gang einer Ganggruppe.

12. Verfahren nach einem der vorstehenden Ansprüche, **dadurch gekennzeichnet, dass** der Schritt des Berechnens eines Schaltpunkt-Deltawertes basierend auf dem Beschleunigungsdeltawert umfasst, dass überprüft wird, dass die durchschnittliche Vorschalt-Maschinenbeschleunigung größer als die durchschnittliche Nachschalt-Maschinenbeschleunigung ist.

## Revendications

1. Procédé de réglage d'un point de changement de vitesse d'une transmission automatique comprenant les étapes suivantes :

   calculer une accélération de machine pré-changement moyenne lors de la commande d'un passage à un rapport supérieur ;
   calculer une accélération de machine post-changement moyenne ;
   déterminer la différence des accélérations de machine pré-changement et post-changement moyennes pour obtenir une valeur de delta d'accélération ;
   calculer une valeur de delta de point de changement basée sur la valeur de delta d'accélération pour modifier le point de passage à un rapport supérieur associé au passage à un rapport supérieur ; et
   calculer et modifier un point de passage à un rapport inférieur correspondant en se basant sur le point de passage à un rapport supérieur modifié ;
   **caractérisé par** le calcul de la valeur de delta de point de passage par l'intermédiaire d'une table de conversion et la détermination du point de passage à un rapport inférieur par l'intermédiaire d'une transformée appliquée au point de passage à un rapport supérieur modifié basée sur une analyse de transmission.

2. Procédé selon la revendication 1, dans lequel l'accélération de machine pré-changement moyenne est calculée sur une durée de pré-changement et l'accélération de machine post-changement moyenne est calculée sur une durée de post-changement.

3. Procédé selon la revendication 2, dans lequel le calcul de l'accélération de machine post-changement moyenne est effectué après la somme d'une durée de zone morte et de la durée de post-changement.

4. Procédé selon la revendication 3, dans lequel la durée de zone morte vaut entre 0,5 s et 1,5 s.

5. Procédé selon la revendication 3 ou 4, dans lequel la durée de pré-changement vaut entre 0,5 s et 3 s.

6. Procédé selon la revendication 3, 4 ou 5, dans lequel la durée de post-changement vaut entre 0,5 s et 3 s.

7. Procédé selon l'une quelconque des précédentes revendications 2 à 6, dans lequel l'accélération de machine post-changement moyenne est calculée si une accélération moteur à pleins gaz a été utilisée sur la durée de pré-changement, la durée de zone morte et la durée de post-changement.

8. Procédé selon l'une quelconque des revendications précédentes, comprenant en outre une étape de réglage du point de passage à un rapport supérieur sur une valeur prudente pendant une période anti-pompage afin d'empêcher le pompage de la transmission.

9. Procédé selon la revendication 8, dans lequel la période anti-pompage dure 30 s.

10. Procédé selon l'une quelconque des revendications précédentes, comprenant en outre l'étape consistant à vérifier des conditions de pré-changement valides avant l'étape de calcul d'une accélération de machine pré-changement moyenne.

11. Procédé selon la revendication 10, dans lequel les conditions de pré-changement peuvent être sélectionnées comme étant n'importe quelle combinaison des conditions suivantes : le drapeau USP prudent est égal à 0, le mode de passage de transmission est réglé sur automatique ; l'embrayage de verrouillage est en prise, le rapport engagé est dans un rapport inférieur d'un train d'engrenages.

12. Procédé selon l'une quelconque des revendications précédentes, dans lequel l'étape de calcul d'une valeur de delta de point de passage basée sur la valeur de delta d'accélération comprend le fait de vérifier que l'accélération de machine pré-changement moyenne est supérieure à l'accélération de machine post-changement moyenne.

*Fig. 1*

Fig.2

START *30*

MONITOR TOS

*31*

NO ← UPSHIFT COMMANDED

*32*

YES

CALCULATE AVERAGE PRE-SHIFT ACCELERATION *33*

WAIT DEADBAND DURATION *34*

MONITOR TOS AND CALCULATE AVERAGE POST-SHFT ACCELERATION *35*

COMPUTE ACCELERATION Δ *36*

COMPUTE SHIFT POINT Δ

*37*

*Fig.3*

Fig. 4

EP 2 469 128 B1

*Fig. 5*

EP 2 469 128 B1

Fig.6

*Fig. 7*

**EP 2 469 128 B1**

**Patent documents cited in the description**

- US 5568748 A